# DEMANDE DE BREVET EUROPEEN

(11) **EP 0 571 274 A1**
(43) Date de publication de la demande: **24.11.1993**
(21) Numéro de dépôt: 93401278.2
(22) Date de dépôt: 18.05.1993
(51) Int. Cl.: B60T 1/00

(54) **Dispositif de commande d'un frein de parking**

(30) Priorité: 19.05.1992 FR 9206033
(71) Demandeur: REGIE NATIONALE DES USINES RENAULT S.A., F-92109 Boulogne Billancourt (FR)
(72) Inventeur: Fochetti, Mario, F-92370 Chaville (FR); Prenel, Jean-Marc, F-78730 St-Arnoult-en-Yvelines (FR); Clerin, Régis, F-78260 Acheres (FR); Hamon, Hervé, F-75017 Paris (FR)

(57) **Abrégé**

Dispositif de commande de frein de parking de véhicule, comportant une roue de parking dentée (8), reliée aux roues motrices (3) du véhicule par un arbre d'entraînement (4), s'étendant au travers d'un carter (5) de la transmission, et un doigt de blocage (9) pivotant, pouvant s'engager entre deux dents (8') consécutives de la roue de parking (8), de façon à immobiliser les roues motrices (3), par l'intermédiaire de celle-ci, caractérisé, en ce que le carter (5) porte un levier de renvoi (19, 19'), dont le basculement, commandé à partir du poste de conduite du véhicule, assure, par l'intermédiaire d'une tige de poussée (12), le pivotement du doigt de blocage (9), en vue d'engager ou de dégager ce dernier de la roue de parking (8).

## Description

L'invention se rapporte à une commande de frein de parking, notamment pour véhicule automobile. Elle trouve une application privilégiée mais non limitative sur les véhicules équipés d'un moteur électrique.

La publication FR 245 663 de la demanderesse, relative à un mécanisme de blocage en position d'arrêt pour véhicule automobile, décrit une roue de parking reliée aux roues motrices de celui-ci. Cette roue de parking comporte une pluralité de créneaux périphériques, coopérant avec un doigt de blocage à dégagement automatique. Elle est solidaire de l'extrémité d'un arbre du mécanisme de changement de vitesse du véhicule, permettant ainsi d'immobiliser l'ensemble de la transmission et le véhicule, lorsqu'elle est arrêtée par le doigt de blocage. Dans la pratique, la "roue de parking" constitue un moyen d'immobilisation, particulièrement adapté aux véhicules à transmission automatique, car elle peut facilement trouver sa place à l'extrémité d'un arbre de mécanisme de changement de vitesses, à trains épicycloïdaux.

Le développement important des véhicules routiers à motorisation électrique, généralement dépourvus de mécanismes de changement de vitesses, mais le plus souvent dotés de batteries relativement volumineuses, pose aux constructeurs des problèmes spécifiques, d'encombrement et d'implantation d'organes, notamment à l'intérieur du compartiment moteur.

La présente invention vise à résoudre ce type de problème en proposant d'adapter, d'une manière avantageuse, un frein de parking sur une transmission de véhicule électrique. Cette adaptation est bien entendu transposable à d'autres véhicules, sans sortir du cadre de l'invention.

L'invention concerne un dispositif de commande de frein de parking de véhicule, comportant une roue de parking dentée, reliée aux roues motrices par un arbre d'entraînement, s'étendant au travers d'un carter de la transmission, et un doigt de blocage pivotant, pouvant s'engager entre deux dents consécutives de la roue de parking, de façon à immobiliser les roues motrices, par l'intermédiaire de celle-ci. Ce dispositif est caractérisé, en ce que le carter porte un levier de renvoi, dont le basculement, commandé à partir du poste de conduite du véhicule, assure, par l'intermédiaire d'une tige de poussée, le pivotement du doigt de blocage, en vue d'engager ou de dégager ce dernier de la roue de parking.

Selon un mode de réalisation de l'invention, le levier de sélection pivote sur un socle, de façon à agir sur le câble de traction raccordé au levier de renvoi.

Selon un mode de réalisation de l'invention, l'extrémité du câble de traction est fixée sur la première branche d'un levier à deux branches, pivotant sur une console, munie d'une bague, d'arrêt de la gaine.

Selon un mode de réalisation de l'invention, la console est disposée à l'intérieur du compartiment moteur, à proximité du levier de renvoi.

Selon un mode de réalisation de l'invention, la seconde branche du levier pivotant est raccordée au levier de renvoi, par l'intermédiaire d'une bielle et d'une biellette de commande.

Selon un mode de réalisation de l'invention, la seconde branche du levier pivotant porte une rotule, engagée à l'intérieur d'un alésage prévu à l'extrémité de la bielle de commande.

Selon un mode de réalisation de l'invention, la bielle de commande est guidée en coulissement à l'intérieur d'un palier, solidaire du carter, de sorte que son déplacement, sous l'action du levier pivotant est pratiquement linéaire.

Selon un mode de réalisation de l'invention, le basculement du levier de renvoi est assuré par un actionneur électrique.

Selon un mode de réalisation de l'invention, l'actionneur assure le basculement du levier de renvoi par l'intermédiaire d'un réducteur à vis sans fin.

Selon un mode de réalisation de l'invention, le levier de renvoi est en appui sur l'extrémité inférieure de la tige de poussée, et il peut déplacer longitudinalement celle-ci, le long d'un diabolo de guidage, solidaire du carter, de façon à permettre à la tige de poussée, de basculer le doigt de blocage, contre la roue de parking.

Selon un mode de réalisation de l'invention, la tige de poussée porte un cône de poussée permettant de repousser le doigt de blocage contre la roue de parking, lors de son passage devant le diabolo.

Selon un mode de réalisation de l'invention, un ressort d'enclenchement est enroulé autour de la partie inférieure de la tige de poussée, de façon à pouvoir ajuster élastiquement la longueur de celle-ci, lorsque le doigt de blocage, aborde la roue de parking, sans être positionné entre deux dents.

Selon un mode de réalisation de l'invention, un ressort de dégagement est monté sur le carter, autour du même axe de basculement que le doigt de blocage, ce ressort de dégagement étant en, appui contre le doigt de blocage et le carter, de façon à dégager le doigt de blocage, de la roue de parking, dès qu'il n'est plus soumis à la poussée du cône.

Selon un mode de réalisation de l'invention, le moteur est un moteur électrique.

Selon un mode de réalisation de l'invention, le carter de transmission renferme un réducteur.

Selon un mode de réalisation de l'invention, le levier de sélection présente une position de parking, dans laquelle la roue de parking est verrouillée, et au moins une position neutre, une position de marche avant et une position de marche arrière, dans lesquelles la roue de parking est déverrouillée.

Selon un mode de réalisation de l'invention, l'actionneur est contrôlé par un boîtier de sélection présentant une position de parking dans laquelle la roue de parking est verrouillée, et au moins une position neutre, une position de marche avant et une position de marche arrière dans laquelle la roue de parking est déverrouillée.

L'invention sera mieux comprise à la lecture de la description suivante d'un mode de réalisation particulier de celle-ci, en liaison avec les dessins annexés, sur lesquels :
- la figure 1 est un schéma d'implantation général,
- la figure 2 est une vue selon la flèche A du carter mentionné sur la figure 1,
- la figure 3 représente un premier mode de réalisation du dispositif de commande de l'invention, en position relâchée,
- la figure 4 correspond au même mode de réalisation en position de freinage.
- la figure 5 illustre un second mode de réalisation de l'invention.

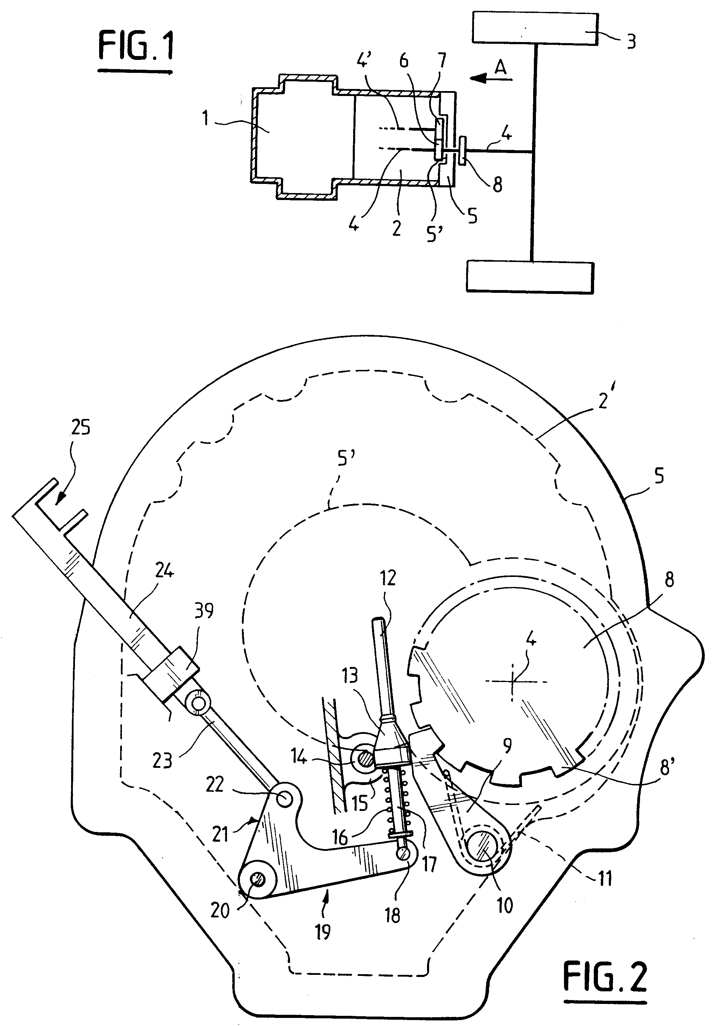

Sur la figure 1, le moteur 1, par exemple électrique, d'un véhicule automobile, est associé à un réducteur 2, qui transmet le mouvement aux roues 3, par l'intermédiaire de l'arbre d'entraînement 4. Celui-ci traverse le carter 5, constituant la paroi frontale du réducteur 2. Sur la face intérieure du carter 5, on remarque un évidement 5', ménagé dans la masse de celui-ci. Cet évidement 5' reçoit les pignons d'extrémité 6, 7, de deux arbres 4, 4' du mécanisme de réduction. La roue de parking 8 est portée par l'arbre 4, à l'extérieur du carter 5.

La figure 2, représentant les éléments de commande disposés sur la face extérieure du carter 5, fait état, en traits interrompus, de l'implantation de l'évidement 5', dans la masse du carter, et du bord de la paroi latérale 2' du réducteur 2, sur lequel est en appui le carter 5.

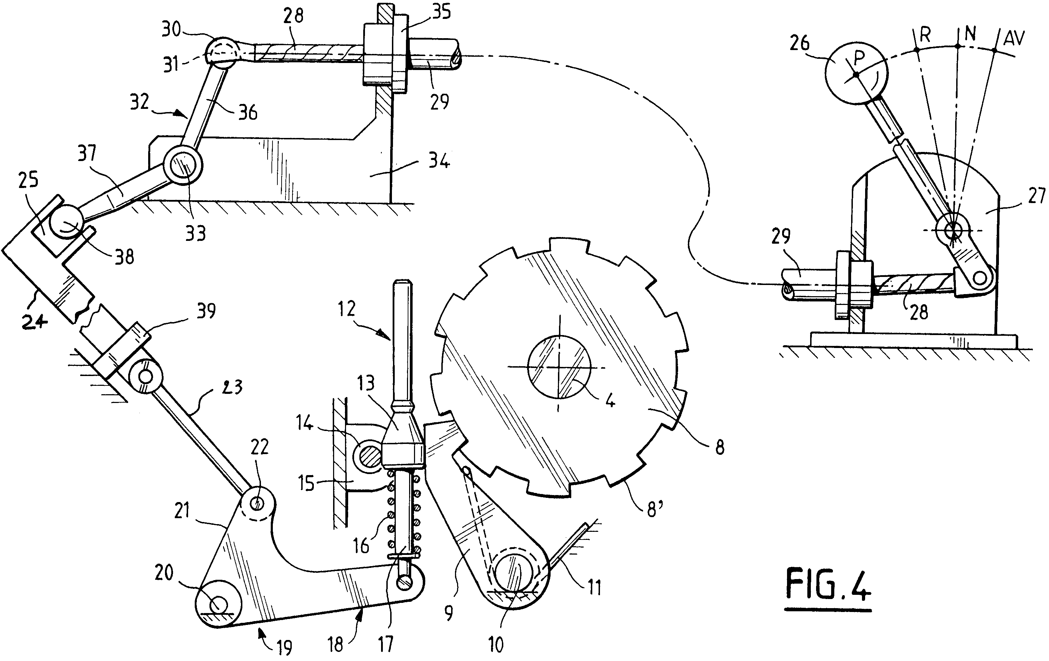

Comme indiqué plus haut, la roue de parking 8 est solidaire en rotation de l'arbre d'entraînement 4. Les dents 8', découpées sur la périphérie de celle-ci, sont destinées à recevoir le doigt de blocage 9, pivotant sur un axe 10 porté par le carter 5. Un ressort de déverrouillage, 11 enroulé autour de l'axe 10 du doigt de blocage 9, est en appui contre, le carter 5, et le doigt 9, en vue d'assurer le retrait de ce dernier, lors du déverrouillage de la roue de parking 8. Une tige de poussée 12, portant un cône de poussée 13, maintient dans la position de verrouillage, illustrée par les figures 2 et 4, le doigt de blocage 9, entre deux dents 8' de la roue de parking 8. Le diabolo 14, porté par la patte 15, elle-même fixée sur le carter 5, a pour fonction de guider le déplacement de la tige 12 et du cône 13 en roulant contre ceux-ci, lorsque le dispositif de commande est sollicité. Un ressort d'enclenchement 16, enroulé autour de la partie inférieure de la tige de commande 12, permet d'ajuster élastiquement la longueur de celle-ci, pour permettre l'enclenchement du doigt de blocage 9, dans le cas où ce dernier n'est pas positionné entre deux dents 8' de la roue 8.

La tige de commande 12, est articulée, par sa partie inférieure 17, sur la première branche 18, en l'occurrence la plus grande, d'un levier de renvoi 19 à deux branches 18, 21, pouvant basculer autour d'un pivot 20, porté par le carter 5. La seconde branche 21 du levier 19, reçoit une rotule 22, portée par l'extrémité d'une biellette 23, elle-même articulée à son extrémité supérieure sur une bielle de commande 24. La bielle24, est mobile le long du carter 5 à travers un palier de guidage 39. L'extrémité supérieure de la bielle 24 présente un alésage 25, permettant sa connexion aux autres éléments du dispositif de commande, non représentés sur la figure 2.

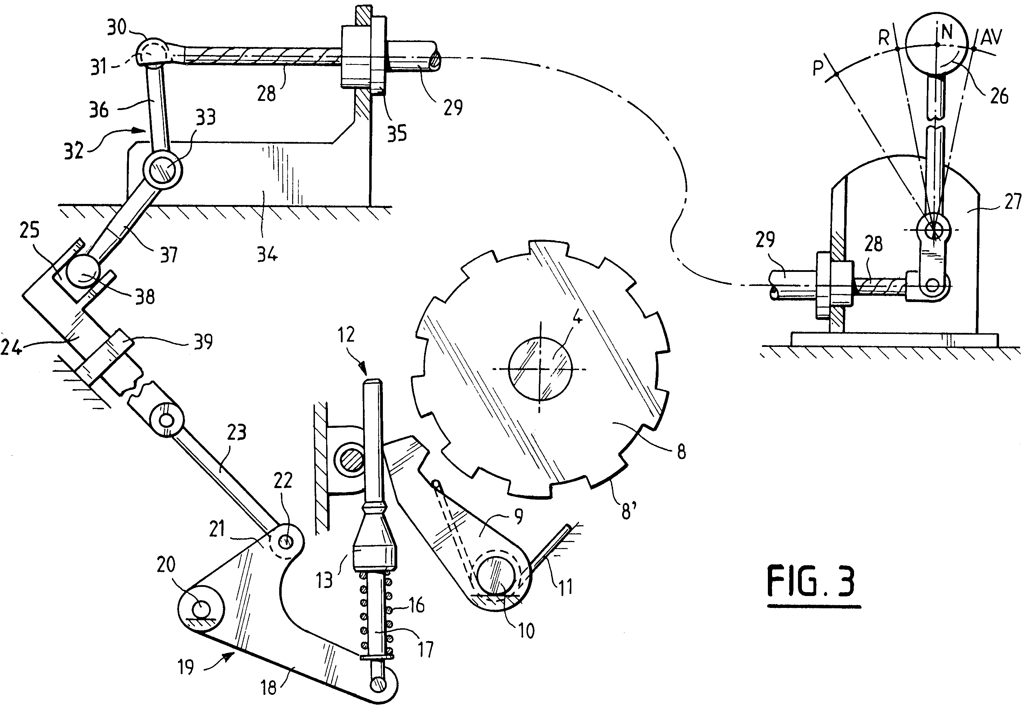

Le fonctionnement du premier mode de réalisation de l'invention va maintenant être décrit en se référant aux figures 3 et 4, illustrant respectivement la situation de ce dispositif, lorsque le frein de parking n'est pas verrouillé, et lorsqu'il est verrouillé. Sur la figure 3, le levier de sélection 26 est représenté en position "neutre" (N). Le doigt de blocage 9 est alors dégagé de la roue de parking 8. 11 en est de même lorsque le levier 26 est en position de marche avant (AV) ou de marche arrière (AR). En revanche, lorsque le levier 26 est en position de parking (P), conformément à la figure 4, le frein de parking est verrouillé, grâce à l'enclenchement du doigt de blocage 9, entre deux dents 8' de la roue de parking 8, sous la poussée du cône 13.

La chaîne cinématique, permettant d'engager ou de dégager le doigt de blocage 9, pour actionner le frein de parking, à partir du levier de sélection 26, est la suivante. Lorsqu'il pivote sur son socle 27, le levier 26 déplace, un câble de commande 28, circulant à l'intérieur d'une gaine 29 dans le compartiment moteur en direction de la roue de parking 8. Une console 34, munie d'une bague d'arrêt de gaine 35 est disposée à proximité de la roue 8. La console 34 porte un levier pivotant 32, à deux branches 36, 37, assurant la connexion entre le câble 28, et la bielle de commande 24. Le levier 32 pivote autour d'un axe 33, sur la console 35. L'extrémité du câble 28 présente un logement sphérique 30 recevant une première rotule 31 fixée à l'extrémité du premier bras 36 du levier pivotant 32, tandis qu'une seconde rotule 38, fixée à l'extrémité de son second bras 37, est engagée à l'intérieur d'un alésage 25, prévu à l'extrémité de la bielle de commande 23.

Conformément aux figures 3 et 4, en réponse à un déplacement vers la gauche du levier de sélection 26, à partir de sa position AV, N ou R, jusqu'à sa position, P la traction exercée par le câble 28 sur le premier bras 36 du levier pivotant 32, se traduit par une traction correspondante sur l'extrémité de la bielle 24, et un basculement du levier de renvoi 19 dans le sens contraire des aiguilles d'une montre, autour de l'axe 20. La poussée exercée par le bras 18 du levier de renvoi 19 sur la tige de commande 12, permet à celle-ci, et au cône de poussée 13 de se déplacer le long du diabolo 14, le cône de poussée 13 assurant l'engagement du doigt de blocage 9, entre deux dents 8' de la roue 8, grâce à l'ajustement élastique de la longueur de la tige 12.

En revanche un déplacement vers la droite du levier de sélection 26 à partir de sa position P, se traduit par une poussée sur le câble 28, une poussée vers le bas sur la bielle 23, et un basculement du levier de renvoi 19, dans le sens des aiguilles d'une montre. Le doigt de blocage 9 se dégage alors de la roue 8, avec le concours du ressort de déverrouillage 11.

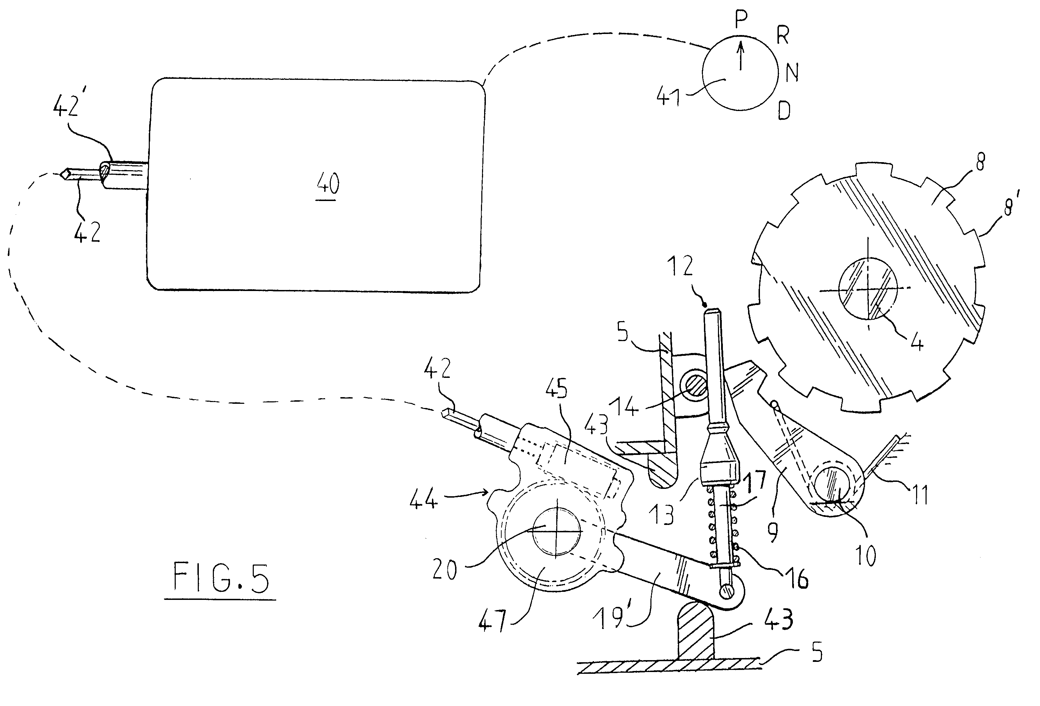

Sur la figure 5, on retrouve certains éléments figurant sur les figures précédentes, dont la roue de parking 8, le doigt de blocage 9, la tige de commande 12 et le diabolo 14. Le levier 19' ne présente qu'une seule branche, pouvant basculer entre deux butées 43 solidaires du carter 5, autour de son axe 20. Le basculement du levier 19' est assuré par un actionneur électrique 40 contrôlé par l'utilisateur à l'aide d'un bouton de sélection 41. L'actionneur 40 fait tourner dans sa gaine 42', un câble 42 dont l'extrémité opposée est reliée à un réducteur 44. Le réducteur 44 peut avantageusement être un réducteur à vis sans fin 45. Dans ce cas, l'extrémité du câble 42 est fixée directement à une vis sans fin 46 en prise avec une roue crantée 47 solidaire en rotation du levier 19'. Le bouton de sélection 41 présente une position de parking P dans laquelle la roue de parking 8 est verrouillée, et au moins en position neutre N, une position de marchant avant AV, et une position de marche arrière, dans lesquelles la roue de parking 8 est déverrouillée.

Les deux modes de réalisation de l'invention, correspondant respectivement aux figures 2, 3, 4 et à la figure 5, permettent d'assurer de façon simple, la commande du verrouillage et du déverrouillage d'un frein de parking de véhicule routier. L'invention trouve sa principale application sur un véhicule équipé d'un moteur électrique, et d'un réducteur, mais peut être transposée à d'autres commandes de freinage.

## Revendications

**1)** Dispositif de commande de frein de parking de véhicule, comportant une roue de parking dentée (8), reliée aux roues motrices (3) du véhicule par un arbre d'entraînement (4), s'étendant au travers d'un carter (5) de la transmission, et un doigt de blocage (9) pivotant, pouvant s'engager entre deux dents (8') consécutives de la roue de parking (8), de façon à immobiliser les roues motrices (3), par l'intermédiaire de celle-ci, caractérisé en ce que le carter (5) porte un levier de renvoi (19, 19'), dont le basculement, commandé à partir du poste de conduite du véhicule assure, par l'intermédiaire d'une tige de poussée (12), le pivotement du doigt de blocage (9), en vue d'engager ou de dégager ce dernier de la roue de parking (8).

**2)** Dispositif de commande selon la revendication 1, caractérisé en ce que le levier de sélection (26), pivotant sur un socle (27), de façon à agir sur le câble (28) de traction raccordé au levier de renvoi (19, 19').

**3)** Dispositif de commande selon la revendication 2, caractérisé en ce que, l'extrémité (31) du câble de traction (28) est fixée sur la première branche (36) d'un levier (32) à deux branches (36, 37), pivotant sur une console (34), munie d'une bague (35), d'arrêt de la gaine (29).

**4)** Dispositif de commande selon la revendication 3, caractérisé en ce que la console (34) est disposée à l'intérieur du compartiment moteur, à proximité du levier de renvoi (19).

**5)** Dispositif de commande selon la revendication 4, caractérisé en ce que la seconde branche (37) du levier pivotant (32) est raccordée au levier de renvoi (19), par l'intermédiaire d'une bielle (24) et d'une biellette (23) de commande.

**6)** Dispositif de commande selon la revendication 5, caractérisé en ce que la seconde branche (37) du levier pivotant (32) porte une rotule (38), engagée à l'intérieur d'un alésage (25) prévu à l'extrémité de la bielle de commande (24).

**7)** Dispositif de commande selon les revendications 5 ou 6, caractérisé en ce que la bielle de commande (24) est guidée en coulissement à l'intérieur d'un palier (39), solidaire du carter (5), de sorte que son déplacement, sous l'action du levier pivotant (32), est pratiquement linéaire.

**8)** Dispositif de commande selon la revendication 7, caractérisé en ce que le basculement du levier de renvoi (19') est assuré par un actionneur électrique (40).

**9)** Dispositif de commande selon la revendication 8, caractérisé en ce que l'actionneur (40) assure le basculement du levier de renvoi (19') par l'intermédiaire d'un réducteur à vis sans fin (45).

**10)** Dispositif de commande selon l'une quelconque des revendications précédentes, caractérisé en ce que le levier de renvoi (19, 19') est en appui sur l'extrémité inférieure de la tige de poussée (12), et en ce qu'il peut déplacer longitudinalement celle-ci, le long d'un diabolo (14) de guidage, solidaire du carter (5), de façon à permettre à la tige de poussée (12), de basculer le doigt de blocage (9), contre la roue de parking (8).

**11)** Dispositif de commande selon la revendication 8, caractérisé en ce que la tige de poussée (12) porte un cône de poussée (13) permettant de repousser le doigt de blocage (9) contre la roue de parking (8), lors de son passage devant le diabolo (14).

**12)** Dispositif de commande selon l'une quelconque des revendications précédentes, caractérisé en ce qu'un ressort d'enclenchement (16) est enroulé autour de la partie inférieure (17) de la tige de poussée (12), de façon à pouvoir ajuster élastiquement la longueur de celle-ci, lorsque le doigt de blocage (9), aborde la roue de parking (8), sans être positionné entre deux dents (8').

**13)** Dispositif de commande selon l'une quelconque des revendications précédentes, caractérisé en ce qu'un ressort de dégagement (11) est monté sur le carter (5), autour du même axe de basculement (10) que le doigt de blocage (9), ce ressort de dégagement (11) étant en appui contre le doigt de blocage (9) et le carter (5), de façon à dégager le doigt de blocage (9), de la roue de parking (8), dès qu'il n'est plus soumis à la poussée du cône (13).

**14)** Dispositif de commande selon l'une quelconque des revendications précédentes, caractérisé en ce que le moteur (1) est un moteur électrique.

**15)** Dispositif de commande selon la revendication 14, caractérisé en ce que le carter de transmission (5) renferme un réducteur (2).

**16)** Dispositif de commande selon l'une quelconque des revendications 1 à 7 et 10 à 15, caractérisé en ce que le levier de sélection (26) présente une position de parking, dans laquelle la roue de parking (8) est verrouillée, et au moins une position neutre, une position de marche avant et une position de marche arrière, dans lesquelles la roue de parking (8) est déverrouillée.

**17)** Dispositif de commande selon l'une quelconque des revendications 1 à 7 et 8 à 15, caractérisé en ce que l'actionneur (40) est contrôlé par un bouton de sélection (41) présentant une position de parking dans laquelle la roue de parking (8) est verrouillée, et au moins une position neutre, une position de marche avant et une position de marche arrière dans laquelle la roue de parking (8) est déverrouillée.
